# EUROPEAN PATENT APPLICATION

(11) **EP 1 068 784 A1**
(43) Date of publication of application: **17.01.2001**
(21) Application number: 00201927.1
(22) Date of filing: 31.05.2000
(51) Int. Cl.: A01C 17/00, A01D 75/28, G01C 9/00

(54) **An implement for spreading granular and/or pulverulent material**

(30) Priority: 12.07.1999 NL 1012569
(71) Applicant: Lely Research Holding AG, 6300 Zug (CH)
(72) Inventor: Van der berg, Karel, 2971 BR Bleskensgraaf (NL); Van der Lely, Alexander, 3065 NA Rotterdam (NL); Van der Beek, Evert, 6741 PH Lunteren (NL)
(74) Representative: Corten, Maurice Jean F.M.

(57) **Abstract**

The invention relates to an implement for spreading granular and/or pulverulent material, which implement comprises a frame with a hopper (2), a metering unit (3) for metering the material and at least one spreading member (4) for spreading the material. The implement is further provided with adjusting means (10) with the aid of which the implement or the spreading member (4) and/or the metering unit (3) is/are automatically maintained in a fixed position relative to the ground, even during spreading of the material over uneven and/or sloping ground.

## Description

The invention relates to an implement for spreading granular and/or pulverulent material, which implement comprises a frame with a hopper, a metering unit for metering the material and at least one spreading member for spreading the material.

Such an implement is known.

In such an implement it is of major importance that the material to be spread is spread as uniformly as possible over the terrain. The known implement has the disadvantage that, when travelling across uneven or sloping ground, the material to be spread is not always distributed uniformly over the terrain.

The invention aims at providing an implement of the aforementioned type, in which the above-mentioned drawback does not occur or is at least minimized to a considerable extent.

In accordance with the invention, this is achieved in that the implement is provided with adjusting means with the aid of which the implement or the spreading member and/or the metering unit is/are automatically maintained in a fixed position relative to the ground, even during spreading of the material over uneven and/or sloping ground. In the situation in which the material is spread over uneven ground, there is meant by a fixed position that, during travelling across such ground, the implement or the spreading member and/or the metering unit is/are not affected by the dynamic movements occurring as a result of travelling across this type of terrain. When travelling across sloping ground, the fixed position implies that the distance from the implement or the spreading member and/or the metering unit to the ground surface remains constant, even in the case of varying gradients.

According to an inventive feature, the adjusting means comprise setting means with the aid of which, prior to and/or during spreading, the fixed position of the implement or the spreading member and/or the metering unit relative to the ground can be set. By bringing the entire implement into a tilted position with the aid of the setting means, it is further possible to carry out edge-spreading. It is also possible to alter the spreading path of the granular and/or pulverulent material by bringing the spreading member into different angular positions.

In a first embodiment of the invention, irregularities in the terrain are automatically compensated because of the fact that the adjusting means comprise a flywheel which is connected to the shaft by means of which the spreading member is driven. According to a further inventive feature, the spreading member and the metering unit are interconnected during travelling across uneven ground and movable relative to the other parts of the implement. Thus it is prevented that, during travelling across uneven ground, the material from the metering unit hits the spreading member at a different place. According to again another inventive feature, the adjusting means are active under the influence of gravitational force and comprise a mechanical readjusting device. According to another embodiment of the invention, the adjusting means comprise a control cylinder and/or an adjusting motor. For the purpose of determining the angle at which the implement or the spreading member and/or the metering unit is/are situated during spreading, according to an inventive feature, the adjusting means comprise a clinometer. According to a further inventive feature, the adjusting means may comprise, besides the clinometer, a gyroscope.

According to another aspect of the invention, the adjusting means are connected to a computer in which the data regarding the contours of the terrain to be spread are recorded. According to a further inventive feature, the adjusting means are connected to a navigation system, such as e.g. DGPS. In this manner, during travelling, the position of the spreading implement and the angle of inclination at which the implement is situated and/or the extent of irregularity of the terrain can be determined, which makes it possible to alter automatically the position of the implement or the spreading member and/or the metering unit relative to the ground.

According to an inventive feature, the implement is constituted by a fertilizer broadcaster provided with two or more discs.

The invention will now be explained in further detail with reference to the accompanying drawings, in which
Figure 1 is a rear view of a fertilizer spreader which is provided with adjusting means with the aid of which the metering unit and the spreading member are adjusted, and
Figure 2 is a second embodiment of a fertilizer spreader which is provided with adjusting means comprising a flywheel.

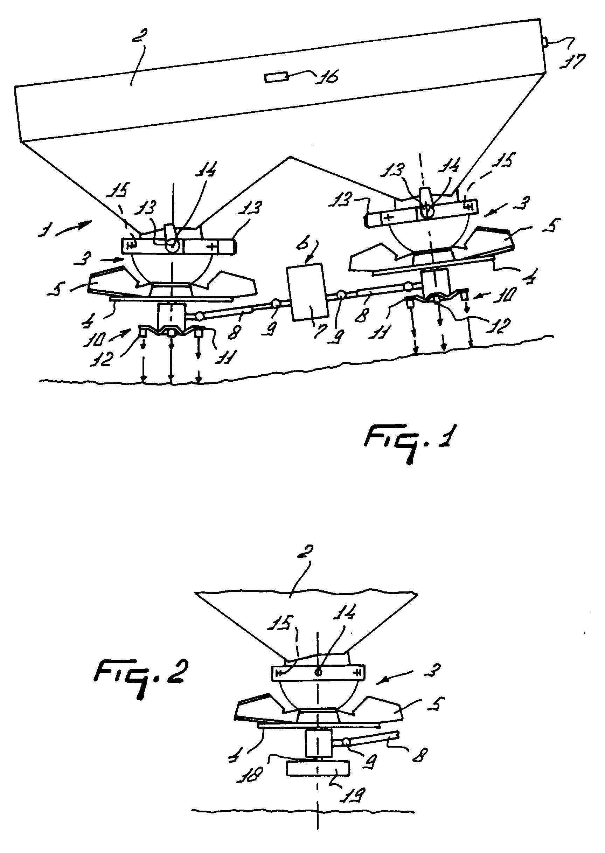

Figure 1 is a rear view of a fertilizer spreader 1 which is provided with a hopper 2 with two spaced-apart metering units 3 located thereunder. Under the metering units 3 there are disposed spreader discs 4 which are provided with ejection blades 5. The spreader discs 4 are driven by means of a drive unit 6. The drive unit 6 comprises a central gear box 7 having on either side drive shafts 8. Each of the drive shafts 8 comprises two flexible couplings 9. Each of the metering units 3 and the spreader discs 4 is provided with adjusting means 10 with the aid of which the spreader discs 4 and the metering units 3 are maintained in a fixed position relative to the ground. In the present embodiment, the adjusting means 10 comprise distance measuring means 11 with the aid of which the distance to the ground surface is measured. In the present embodiment, the distance measuring means 11 comprise three ultrasonic sensors 12. The distance measuring means 11, i.e. the ultrasonic sensors 12, are connected to a (non-shown) computer. When the fertilizer spreader 1 tilts forwards or rearwards or sidewards, as a result of e.g. a ditch in the direction of travel or transversely thereto, there is measured a difference in the distance to the ground by means of the ultrasonic sensors 12. This results in a disturbance of the spread pattern. For the purpose of preventing this, the adjusting means 10 comprise adjusting motors 13 by means of which both the metering unit 3 and the spreader disc 4 can be rotated about an axis 14 in the direction of travel, and about an axis 15 transversely to the direction of travel, respectively. The distance measuring means 11 are particularly appropriate when the fertilizer spreader 1 is travelling at the boundary of flat and sloping grounds. The fertilizer spreader 1 is further provided with a first clinometer 16 by means of which the angle can be determined through which the fertilizer spreader 1, seen in the direction of travel, tilts forwards or rearwards, as well as with a second clinometer 17 by means of which the angle can be determined through which the fertilizer spreader 1 tilts, seen transversely to the direction of travel. The first and second clinometers 16, 17 are particularly appropriate when the fertilizer spreader 1 is travelling on sloping ground.

Figure 2 shows a second embodiment of a fertilizer spreader 1 according to Figure 1, which is particularly appropriate for travelling across uneven ground. Parts corresponding to those of Figure 1 are indicated by the same reference numerals. In the embodiment of Figure 2, a flywheel 19, which is driven about an axis 18, is disposed near the lower side of the spreader disc 4. The flywheel 19 is driven by the drive shaft 8 and is coupled with the spreader disc 4. The metering unit 3 and the spreader disc 4 and the flywheel 19 are pivotable about axes 14 en 15. Because of the flywheel 19 and the cardan suspension around the axes 14 and 15, the spreader disc 4 maintains its horizontal position, even during travelling across uneven ground.

## Claims

1. An implement for spreading granular and/or pulverulent material, which implement comprises a frame with a hopper (2), a metering unit (3) for metering the material and at least one spreading member (4) for spreading the material, characterized in that the implement is provided with adjusting means (10) with the aid of which the implement or the spreading member (4) and/or the metering unit (3) is/are automatically maintained in a fixed position relative to the ground, even during spreading of the material over uneven and/or sloping ground.

2. An implement as claimed in claim 1, characterized in that the adjusting means (10) comprise setting means (13, 19) with the aid of which, prior to and/or during spreading, the fixed position of the implement or the spreading member (4) and/or the metering unit (3) relative to the ground can be set.

3. An implement as claimed in claim 1 or 2, characterized in that the adjusting means (10) comprise a flywheel (19) which is connected to the axis (18) by means of which the spreading member (4) is driven.

4. An implement as claimed in claim 3, characterized in that the spreading member (4) and the metering unit (3) are interconnected and are moved relative to the other parts of the implement during travelling over uneven ground.

5. An implement as claimed in claim 1 or 2, characterized in that the adjusting means (10) are active under the influence of the gravitational force and comprise a mechanical readjusting device.

6. An implement as claimed in claim 1 or 2, characterized in that the adjusting means (10) comprise a control cylinder and/or an adjusting motor (13).

7. An implement as claimed in any one of the preceding claims, characterized in that the adjusting means (10) comprise distance measuring means (11) with the aid of which the distance to the ground is measured.

8. An implement as claimed in any one of the preceding claims, characterized in that the adjusting means (10) comprise a clinometer (16, 17).

9. An implement as claimed in any one of the preceding claims, characterized in that the adjusting means (10) comprise a gyroscope.

10. An implement as claimed in any one of the preceding claims, characterized in that the adjusting means (10) are connected to a computer in which data regarding the contours of the terrain to be spread are recorded.

11. An implement as claimed in any one of the preceding claims, characterized in that the adjusting means (10) are connected to a navigation system, such as e.g. DGPS.

12. An implement as claimed in any one of the preceding claims, characterized in that the implement is constituted by a fertilizer broadcaster provided with two or more discs.

13. An implement as claimed in claim 12, characterized in that the spread sectors of the spreader discs (4) touch each other or at least overlap each other.

14. An implement as claimed in claim 13, characterized in that touching or overlapping of the spread sectors takes place in the centre plane of the spreader.
